# EUROPÄISCHE PATENTSCHRIFT

(11) **EP 1 253 990 B1**
(45) Veröffentlichungstag und Bekanntmachung des Hinweises auf die Patenterteilung: **20.07.2005**
(21) Anmeldenummer: 00978926.4
(22) Anmeldetag: 15.11.2000
(51) Int. Cl.: B23K 9/133

(54) **SCHWEISSDRAHTFÖRDEREINRICHTUNG MIT HAUPT- UND HILFSANTRIEB**
WELDING ROD DRIVE UNIT WITH MAIN AND AUXILIARY DRIVES
DISPOSITIF D'ACHEMINEMENT DE FIL DE SOUDURE AVEC ENTRAINEMENTS PRINCIPAL ET AUXILIAIRE

(30) Priorität: 19.11.1999 AT 196899
(43) Veröffentlichungstag der Anmeldung: 06.11.2002
(60) Teilanmeldung: 03017244.9
(73) Patentinhaber: Fronius International GmbH, 4643 Pettenbach (AT)
(72) Erfinder: ARTELSMAIR, Josef, A-4552 Wartberg/Krems (AT); BRUNNER, Michael, A-8055 Seiersberg (AT); MÖRTENDORFER, Bernhard, A-4551 Ried im Traunkreis (AT)
(74) Vertreter: Secklehner, Günter, Dr.
(86) Internationale Anmeldenummer: PCT/AT2000/000302
(87) Internationale Veröffentlichungsnummer: WO 2001/038034

(56) Entgegenhaltungen:
- CH-A- 618 115
- DE-A- 19 855 033
- DE-U- 29 716 009
- US-A- 1 927 896
- PATENT ABSTRACTS OF JAPAN vol. 1997, no. 03, 31. März 1997 (1997-03-31) & JP 08 309536 A (BABCOCK HITACHI KK), 26. November 1996 (1996-11-26)

## Beschreibung

Die Erfindung betrifft ein Verfahren zum Fördern von Schweißdraht von einem Drahtvorrat zu einem Schweißbrenner und eine Vorrichtung, wie diese in den Oberbegriffen der Ansprüche 1 und 14 beschrieben sind, siehe z.B. DE A 197 32 379.

Es ist bereits ein Verfahren und eine Vorrichtung zum Fördern eines Schweißdrahtes aus der DE A 197 32 379 bekannt, bei der der Schweißdraht von einem Drahtvorrat zu einer Schweißeinrichtung, insbesondere einem Schweißbrenner, mit jeweils dem Drahtvorrat und dem Schweißbrenner zugeordneten Schweißdrahtfördervorrichtungen, insbesondere einem Hilfsantrieb und einem Hauptantrieb, zugeführt wird, wobei die in der Drahtzuführung auftretenden Kraftschwankungen bzw. ein Förderdruck oder eine Druckkraft kompensiert bzw. begrenzt werden. Die Kraftschwankung bzw. der Förderdruck oder die Druckkraft wird innerhalb des Hilfsantriebes mit einem elastisch verformbaren Element kompensiert bzw. begrenzt, wobei das Element zwischen dem Antriebsmotor und dem den Schweißdraht schlupffrei antreibenden Antriebselement angeordnet ist.

Nachteilig ist hierbei, daß das elastisch verformbare Element mit dem Antriebsmotor gekoppelt ist, sodaß eine direkte Beeinflussung der Drehbewegung auf das Element vorhanden ist.

Weiters ist aus der DE 43 20 405 C2 eine Vorrichtung zur Förderung eines Schweißdrahtes von einem Drahtvorrat zu einem Schweißbrenner bekannt, bei der dem Schweißbrenner und dem Drahtvorrat jeweils eine Schweißdrahtfördervorrichtung, insbesondere ein Hauptantrieb und ein Hilfsantrieb, zugeordnet sind. Dabei ist zwischen dem Drahtvorrat und dem Schweißbrenner eine Drahtspeichereinheit mit Mittel zum Erfassen des Krümmungsverhaltens des Schweißdrahtes angeordnet, wobei das Mittel durch einen berührungslosen Sensor gebildet ist. Die Sensorsignale des Sensors liegen an einer Steuervorrichtung an, wobei von dieser die Schweißdrahtfördervorrichtungen derart angesteuert werden, daß sich innerhalb der Drahtspeichereinheit eine geschlossene Drahtschlaufe ausbildet.

Nachteilig ist hierbei, daß durch eine Anordnung einer derartigen Drahtspeichereinheit, in der der Schweißdraht eine Drahtschlaufe ausbildet, ein erheblicher Platzaufwand notwendig ist.

Aus der US 1,927,896 A ist eine Vorrichtung zum Fördern eines Schweißdrahtes von einem Drahtvorrat zu einem Schweißbrenner bekannt, bei der wiederum dem Schweißbrenner und dem Drahtvorrat eine Schweißdrahtfördervorrichtung zugeordnet ist. Dabei wird der Schweißdraht in einer gekrümmten Bahn vom Drahtvorrat zum Schweißbrenner befördert. Hierzu wird das Krümmungsverhalten über eine federgetragene Rolle, die unmittelbar an dem Schweißdraht anliegt, gemessen. Nimmt die Spannung des Schweißdrahtes zu, so wird die Rolle nach unten abgelenkt, wodurch ein an die Rolle befestigter Kontaktarm bzw. Hebel einen regelbaren Widerstand verändert. Dieser Widerstand ist mit der Schweißdrahtfördervorrichtung für den Drahtvorrat gekoppelt, wodurch eine Regelung aufgrund des Krümmungsverhaltens des Schweißdrahtes vorgenommen wird.

Nachteilig ist hierbei, daß bereits Schwankungen in der Zufuhr zu dem Schweißbrenner Auswirkungen auf den Regelkreis haben und somit nur ein Einsatz in fix montierte Schweißanlagen ohne Veränderung der Schweißbrennerstellung möglich ist.

In der JP 08309536 A ist eine Schweißanlage gezeigt, bei der der Schweißdraht über ein Schlauchpaket an einem Schweißbrenner zugeführt wird.

Aus der US 3,483,340 A ist ein Überlastsensor für ein Drahtförderungssystem geoffenbart, der ein den Schweißdraht umschließendes Rohr aufweist und der über das Prinzip der Kurzschlußerkennung eine Auslenkung des Schweißdrahtes erkennt.

Der Erfindung liegt die Aufgabe zugrunde, ein Verfahren und eine Vorrichtung zum Fördern von Schweißdraht von einem Drahtvorrat zu einem Schweißbrenner sowie ein Drahtfördersystem zum Fördern und Überwachen eines Schweißdrahtes von einem Drahtvorrat zu einem Schweißbrenner zu schaffen, mit dem eine schlupffreie Förderung des Schweißdrahtes möglich ist und eine sichere und einfache Regelung für mehrere in einer Schweißanlage eingesetzte Schweißdrahtfördervorrichtungen erreicht werden kann.

Die Aufgabe der Erfindung wird durch die Maßnahmen im Kennzeichenteil des Anspruches 1 gelöst. Vorteilhaft ist hierbei, daß durch einen derartigen Aufbau eines Sensors, insbesondere eines Rohrsensors, durch einfache Kurzschlußerkennung des Schweißdrahtes mit dem Gehäuse des Sensors der Förderdruck bzw. die Druckkraft des Schweißdrahtes überwacht werden kann. Ein weiterer Vorteil liegt darin, daß mit einer derartigen Überwachung des Förderdruckes in Förderrichtung des Schweißdrahtes keine zusätzlichen Einflüsse auf den Schweißdraht, wie dies im Stand der Technik der Fall ist, berücksichtigt werden müssen. Durch die Ausbildung des Sensors in Form eines Rohres wird eine kostengünstige Herstellung erzielt, da für einen derartigen Sensor keinerlei elektronische Bauelemente oder bewegliche Teile benötigt werden.

Weitere vorteilhafte Maßnahmen sind in den Ansprüchen 2 bis 13 beschrieben. Die sich daraus ergebenden Vorteile sind aus der Beschreibung zu entnehmen.

Weiters wird die Aufgabe der Erfindung durch die Merkmale im Kennzeichenteil des Anspruches 14 gelöst. Vorteilhaft ist hierbei, daß für die Erfassung des Förderdruckes bzw. der Druckkraft des Schweißdrahtes keinerlei Anpassungen bzw. Einstellungen an die unterschiedlichsten Schweißdrähte vorgenommen werden müssen, da sich das System automatisch auf die Eigensteifigkeit des jeweiligen Schweißdrahtes selbständig einstellt. Dies wird insofern erreicht, da beim Überschreiten der Eigensteifigkeit des Schweißdrahtes durch den Förderdruck der Schweißdraht ausgelenkt wird und somit aufgrund des gebildeten Kurzschlusses mit dem Gehäuse des Rohrsensors eine Reduzierung bzw. Kompensierung des Förderdruckes durch Regelung der Schweißdrahtfördergeschwindigkeit durchgeführt wird, sodaß eine automatische Anpassung des Schweißdrahtfördersystems an die Eigensteifigkeit des Schweißdrahtes vorgenommen wird.

Weitere vorteilhafte Ausgestaltungen sind in den Ansprüchen 15 bis 21 beschrieben. Die sich daraus ergebenden Vorteile sind aus der Beschreibung zu entnehmen.

Weiters wird die Aufgabe der Erfindung durch die Merkmale im Kennzeichenteil des Anspruches 22 gelöst. Vorteilhaft ist hierbei, daß durch ein derartiges Drahtfördersystem spezielle Drahtförderungen, wie beispielsweise eine pulsförmige Drahtzuführung zum Schweißbrenner oder eine Vorwärts- und Rückwärtsförderung des Schweißdrahtes, durchgeführt werden können, wobei sich die Förderkraft bzw. der Förderdruck auf die Eigensteifigkeit des Schweißdrahtes selbständig einstellt.

Die Erfindung wird anschließend durch Ausführungsbeispiele näher beschrieben.

Es zeigen:
- Fig. 1: eine schematische Darstellung einer Schweißmaschine bzw. eines Schweißgerätes;
- Fig. 2: ein Übersichtsbild für die Schweißdrahtförderung mit der Vorrichtung, in vereinfachter, schematischer Darstellung;
- Fig. 3: eine vergrößerte Darstellung eines Sensors der Vorrichtung zur Aufnahme eines Förderdruckes des Schweißdrahtes nach Fig. 1, in vereinfachter, schematischer Darstellung;
- Fig. 4: ein Ausführungsbeispiel für einen Sensor der erfindungsgemäßen Vorrichtung zur Aufnahme des Förderdruckes des Schweißdrahtes, in vereinfachter, schematischer Darstellung;
- Fig. 5: ein anderes Ausführungsbeispiel für einen Sensor der Vorrichtung zur Aufnahme des Förderdruckes des Schweißdrahtes, in vereinfachter, schematischer Darstellung;
- Fig. 6: eine Ansicht gemäß Pfeil VI in Fig. 5 des Sensors zur Aufnahme des Förderdruckes des Schweißdrahtes, in vereinfachter, schematischer Darstellung:

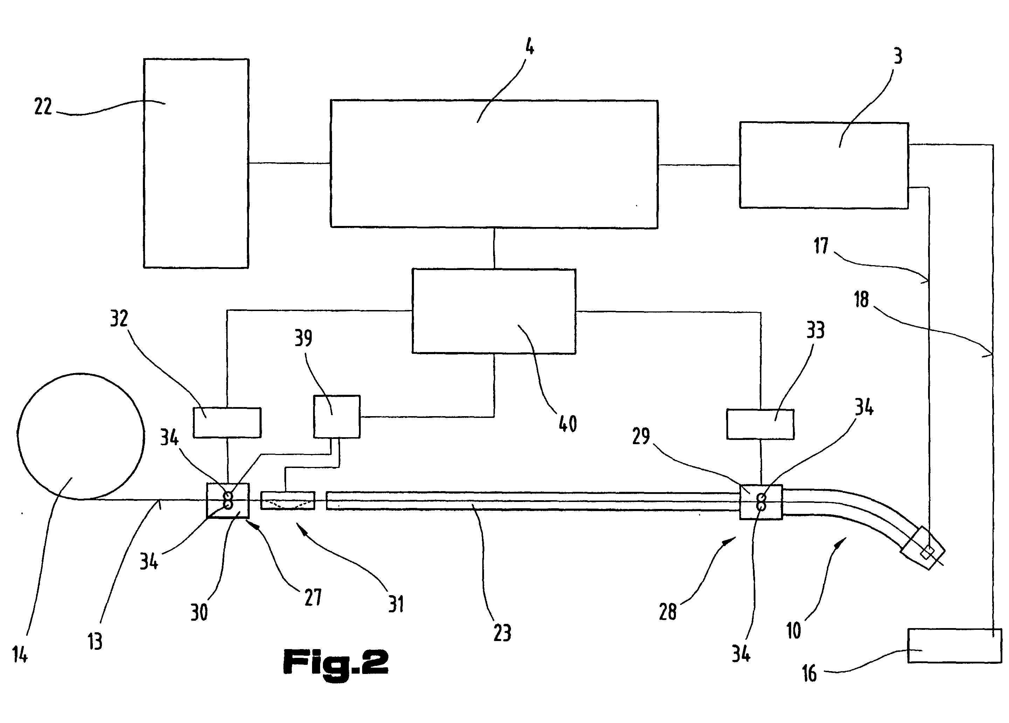

Dabei handelt es sich bei den Fig. 2, 3, 5 und 6 lediglich um Beispiele, die das Verständnis der Erfindung erleichtern; diese stellen keine Ausführungsbeispiele der Erfindung dar.

Einführend wird festgehalten, daß gleiche Teile der einzelnen Ausführungsbeispiele mit gleichen Bezugszeichen versehen werden. Die in den einzelnen Ausführungsbeispielen angegebenen Lageangaben sind bei einer Lageänderung sinngemäß auf die neue Lage zu übertragen.

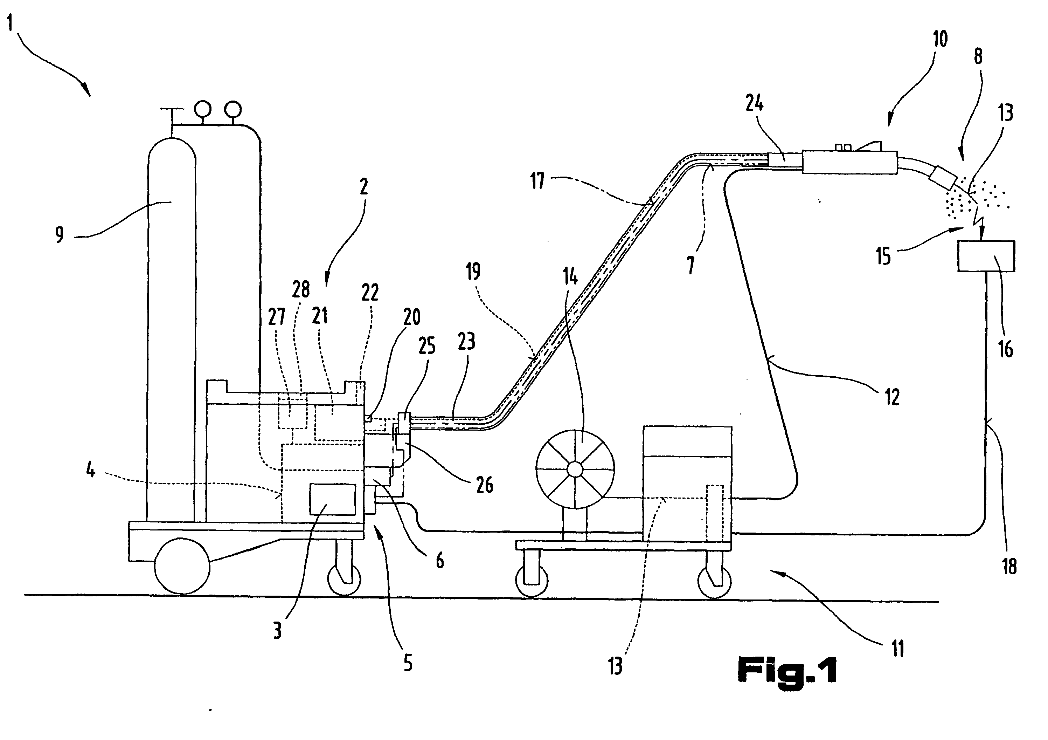

Nachfolgend wird in Fig. 1 ein Ausführungsbeispiel beschrieben, bei welchem es sich nicht um ein Ausführungsbeispiel der Erfindung handelt, dieses jedoch das Verständnis der Erfindung erleichtert.

In Fig. 1 ist eine Schweißanlage bzw. ein Schweißgerät 1 für verschiedenste Schweißverfahren, wie z.B. MIG/MAG-Schweißen bzw. TIG-Schweißen oder Elektroden-Schweißverfahren, gezeigt. Selbstverständlich ist es möglich, daß die erfindungsgemäße Lösung bei einer Stromquelle bzw. einer Schweißstromquelle eingesetzt werden kann.

Das Schweißgerät 1 umfaßt eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Schweißdraht 13 von einem Drahtvorrat 14 in den Bereich des Schweißbrenners 10 zugeführt wird. Selbstverständlich ist es möglich, daß das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Der Strom zum Aufbauen eines Lichtbogens 15 zwischen dem Schweißdraht 13 und einem Werkstück 16 wird über eine Versorgungsleitung 17 vom Leistungsteil 3 der Stromquelle 2 dem Schweißbrenner 10 bzw. dem Schweißdraht 13 zugeführt, wobei das zu verschweißende Werkstück 16 über eine weitere Versorgungsleitung 18 ebenfalls mit dem Schweißgerät 1, insbesondere mit der Stromquelle 2, verbunden ist und somit über dem Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bzw. des Schweißdrahtes bewirkt werden kann.

Das Schweißgerät 1 weist weiters eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 eingestellten Schweißparameter an die Steuervorrichtung 4 weitergeleitet und von dieser werden anschließend die einzelnen Komponenten der Schweißanlage bzw. des Schweißgerätes 1 angesteuert.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine zum Stand der Technik zählende Verbindungsvorrichtung 24 mit dem Schweißbrenner 10 verbunden, wogegen die einzelnen Leitungen im Schlauchpaket 23 mit den einzelnen Kontakten des Schweißgerätes 1 über Anschlußbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden.

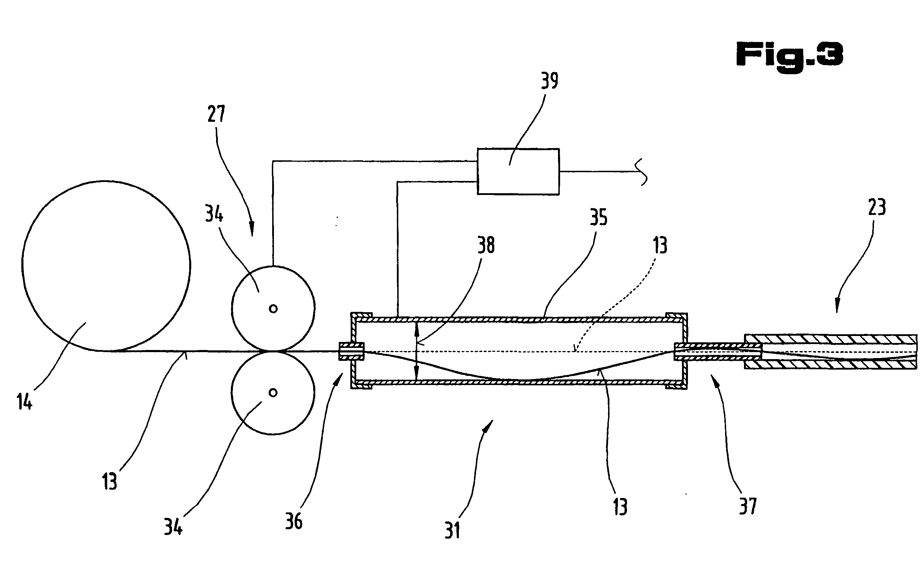

In den Fig. 2 und 3 ist eine Vorrichtung zum Fördern von Schweißdraht 13 von einem Drahtvorrat 14 zu dem Schweißbrenner 10 mit zumindest einer Schweißdrahtfördervorrichtungen 27 und einer Einrichtung, insbesondere einer weiteren Schweißdrahtfördervorrichtung 28, zum Aufbau einer Förderkraft, insbesondere einem Hauptantrieb 29 und einem Hilfsantrieb 30, dargestellt, wobei in der Drahtzuführung eine zwischen den Schweißdrahtfördervorrichtungen 27, 28 auftretende Förderkraft bzw. eine Druckkraft im Schweißdraht 13 über ein Erfassungsmittel, insbesondere einem Rohrsensor 31, erfaßt wird. In Abhängigkeit von einem Ausmaß einer Querbewegung des Schweißdrahtes 13 wird die Förderkraft und/oder-geschwindigkeit zumindest der Schweißdrahtfördervorrichtung 27 und/oder der Einrichtung, insbesondere der weiteren Schweißdrahtfördervorrichtung 28, verändert. Das Ausmaß der Querbewegung des Schweißdrahtes 13 kann durch einen Soll-/ Istvergleich festgestellt werden, wobei der Sollwert als Wert innerhalb jenes Bereiches festgelegt wird, in dem das Erfassungsmittel kein Signal detektiert. Der Hauptantrieb 29 ist am Schweißbrenner 10 bzw. im Bereich des Schweißbrenners 10 angeordnet und der Hilfsantrieb 30 dem Drahtvorrat 14 bzw. im Bereich des Drahtvorrates 14 angeordnet bzw. zugeordnet.

Die Drahtförderung von dem Drahtvorrat 14 zu dem Schweißbrenner 10 erfolgt über das Schlauchpaket 23 oder einer Führungsvorrichtung, insbesondere einer in dem Schlauchpaket 23 oder der Führungsvorrichtung angeordneten Seele. Dem Schweißdraht 13 ist dabei zur Ermittlung einer Kraftschwankung bzw. einer Förderkraft oder einer Druckkraft des Schweißdrahtes der Rohrsensor 31 zugeordnet. Dieser ist dabei zwischen den Schweißdrahtfördervorrichtungen 27, 28, insbesondere dem Hauptantrieb und dem Hilfsantrieb, angeordnet. Die Schweißdrahtfördervorrichtung 27, 28, insbesondere der Hauptantrieb 29 und der Hilfsantrieb 30, sind aus einem Antriebsmotor 32, 33, wie schematisch dargestellt, und einem oder mehreren auf den Schweißdraht 13 einwirkende Antriebselementen 34, insbesondere Antriebsrollen, gebildet.

Der Sensor, insbesondere der Rohrsensor 31, ist in Längsrichtung des Schweißdrahtes 13, also in der Schweißdrahtförderrichtung, angeordnet bzw. dem Schweißdraht 13 zugeordnet. Der Rohrsensor 31 ist durch ein Gehäuse 35, insbesondere durch ein Rohr bzw. ein rohrförmiges Element, und einer Drahteinlaufführung 36 sowie einer Drahtauslaufführung 37 gebildet, wobei die Drahteinlaufführung 36 und die Drahtauslaufführung 37 aus einem nicht elektrisch leitenden Material gebildet sind. Der Rohrsensor 31 hingegen ist aus einem elektrisch leitenden Material gebildet und weist einen Innendurchmesser 38 des Rohres auf, der größer ist als ein Außendurchmesser des Schweißdrahtes 13.

Weiters ist der Rohrsensor 31 bzw. das Gehäuse 35 bzw. das Rohr des Rohrsensors 31 mit einer Detektoreinheit 39 verbunden. Die Detektoreinheit 39 ist wiederum mit einer Schweißdrahtfördervorrichtung 27, insbesondere mit dem Hilfsantrieb 30, bevorzugt mit dem Antriebselement 34, elektrisch leitend verbunden. Die Detektoreinheit 39 ist weiters mit einer für die Schweißdrahtfördervorrichtung 27 und die Einrichtung, insbesondere die weitere Schweißdrahtfördervorrichtung 28, erforderlichen Drehzahlreglereinheit 40 verbunden, wobei einer der Antriebsmotoren 32, 33, welche mit der Drehzahlreglereinheit 40 verbunden sind, in Abhängigkeit der Detektoreinheit 39 angesteuert wird, d.h., daß die Schweißdrahtfördervorrichtung 27 oder die Einrichtung, insbesondere die weitere Schweißdrahtfördervorrichtung 28, auf einer konstanten Drehzahl gehalten wird und die Drehzahl der anderen Schweißdrahtfördervorrichtung 27 oder 28 aufgrund eines Signals von der Detektoreinheit 39 geregelt wird.

Weiters ist die Drehzahlreglereinheit 40 mit der Steuervorrichtung 4 verbunden, sodaß ein Benutzer bzw. Schweißer über die Ein- und/oder Ausgabevorrichtung 22, welche schematisch dargestellt ist, eine Drahtvorschubgeschwindigkeit einstellen kann und somit von der Steuervorrichtung 4 entsprechende Sollwerte an die Drehzahlreglereinheit 40 übersenden kann. Die Regelung bzw. Steuerung erfolgt anschließend von der Drehzahlreglereinheit 40 unabhängig von der Steuervorrichtung 4 des Schweißgerätes 1. Damit ein Schweißprozeß mit dem schematisch dargestellten Aufbau durchgeführt werden kann, ist die Steuervorrichtung 4 mit dem Leistungsteil 3 verbunden. Das Leistungsteil 3 ist weiters über die Schweißleitungen 17, 18 mit dem Schweißbrenner 10 bzw. über eine Kontaktbuchse mit dem Schweißdraht 13 und dem Werkstück 16 verbunden, wodurch der Lichtbogen 15 zwischen dem Schweißdraht 13 und dem Werkstück 16 aufgebaut werden kann.

Damit bei einem gestarteten Schweißprozeß, also bei einer Förderung des Schweißdrahtes 13 von dem Drahtvorrat 14 zum Schweißbrenner 10 und einem gezündeten Lichtbogen 15, ein Auslenken oder ansatzweises Auslenken des Schweißdrahtes 13 aufgrund der Förderkraft bzw. Druckkraft auf den Schweißdraht zwischen den Schweißdrahtfördervorrichtungen 27, 28, insbesondere zwischen dem Hauptantrieb 29 und dem Hilfsantrieb 30, erfaßt wird und dieses Auslenken als Information für die Regelung zumindest einer der Schweißdrahtfördervorrichtung 27, 28 verwendet wird, ist zwischen dem Hauptantrieb 29 und dem Hilfsantrieb 30 der Sensor, insbesondere der Rohrsensor 31, angeordnet.

Bei Aktivieren eines Schweißprozesses wird an die Schweißdrahtfördervorrichtungen 27, 28 von der Drehzahlreglereinheit 40 ein entsprechendes Signal für eine Drehzahl, die für eine bestimmte voreingestellte Drahtfördergeschwindigkeit benötigt wird, übersandt. Dabei wird der Hauptantrieb 29 derartig von der Drehzahlreglereinheit 40 geregelt, daß sich eine konstante Drahtfördergeschwindigkeit einstellt. Der Hilfsantrieb 30 wird hingegen in Abhängigkeit des Hauptantriebes 29 geregelt, wobei am Beginn eines Schweißprozesses die von dem Hilfsantrieb 30 erzeugte Drahtfördergeschwindigkeit höher ist als die des Hauptantriebes 29. Durch die unterschiedliche Regelung der beiden Schweißdrahtfördervorrichtungen 27, 28 baut sich zwischen diesen eine entsprechende Förderkraft bzw. eine entsprechende Druckkraft auf den Schweißdraht 13 auf.

Die Erfassung der Förderkraft bzw. der Druckkraft erfolgt von dem Sensor, insbesondere dem Rohrsensor 31, quer zur Förderrichtung des Schweißdrahtes 13, d.h., daß der Sensor, insbesondere der Rohrsensor 31, den Schweißdraht 13 umschließt, sodaß der Schweißdraht 13 durch den Sensor geführt wird. Der Schweißdraht 13 verläuft bei optimaler Förderkraft im Mittel des Rohrsensors 31. Dieser weist einen Innendurchmesser 38 auf, der größer ist als der Außendurchmesser des Schweißdrahtes 13, sodaß sich der Schweißdraht 13 im Bereich des Rohrsensors 31 frei bewegen kann. Damit wird erreicht, daß bei zu hoher Förderkraft sich der Schweißdraht 13 in diesem Bereich Auslenken kann, d.h., daß bei Übersteigen einer Eigensteifigkeit des Schweißdrahtes 13 dieser versucht, den auf ihn einwirkenden Druck auszuweichen, wodurch ein Ausweichen oder Auslenken des Schweißdrahtes 13 in einem für den Schweißdraht 13 möglichen Bereich im Sensor, insbesondere im Rohrsensor 31, wo dieser nicht geführt wird, entsteht bzw. verursacht wird

Von dem Sensor, insbesondere dem Rohrsensor 31, wird also das Ausweichen bzw. Auslenken des im Mittel bzw. in einer Mittellage des Rohrsensors verlaufenden Schweißdrahtes 13 aufgrund der auftretenden Förderkraft bzw. der Druckkraft auf den Schweißdraht 13 ermittelt, wobei der Schweißdraht 13 bei einer optimalen Förderkraft bzw. einer optimalen Druckkraft des Hilfsantriebes 30 in Richtung des Hauptantriebes 29 im Sensor, insbesondere im Rohrsensors 31, im Mittel bzw. in der Mittellage verläuft und bei einem weiteren Erhöhen der Förderkraft aus dem Mittel, insbesondere aus der Mittellage, gedrückt wird, wie dies in Fig. 3 dargestellt ist.

Dieses Ausweichen bzw. Auslenken des Schweißdrahtes 13 wird von der Drehzahlreglereinheit 40 verursacht, da die Drehzahl bzw. eine Drahtvorschubgeschwindigkeit des Hilfsantriebes 30 höher ist als die Drehzahl bzw. die Drahtvorschubgeschwindigkeit des Hauptantriebes 29 am Schweißbrenner 10. Zur Verringerung bzw. Begrenzung der Förderkraft bzw. der Druckkraft auf den Schweißdraht 13 wird von der Drehzahlreglereinheit 40 die Drehzahl einer der beiden Schweißdrahtfördervorrichtungen 27, 28, insbesondere des Hauptantriebes 29, konstant gehalten, wogegen die Drehzahl der anderen Schweißdrahtfördervorrichtung 27, 28, insbesondere des Hilfsantriebes 30, geregelt bzw. verringert wird, d.h., daß durch Verringerung der Drehzahl, insbesondere der Drahtvorschubgeschwindigkeit, des Hilfsantriebes 30 die Förderkraft bzw. die Druckkraft auf den Schweißdraht 13 verringert wird, da der Hauptantrieb 29 den Schweißdraht 13 weiter konstant in Richtung des Schweißbrenners 10 fördert und vom Hilfsantrieb 30 weniger Schweißdraht 13 vom Drahtvorrat 14 nachgefördert wird. Dadurch hebt sich das Ausweichen bzw. die Auslenkung des Schweißdrahtes 13 im Rohrsensor 31 wieder auf. D.h. also, daß die Drehzahlreglereinheit 40 bei Erhalt eines Signals von der Detektoreinheit 39 die Drehzahl des Hilfsantriebes 30, insbesondere jener Schweißdrahtfördervorrichtung 27, 28 die dem Drahtvorrat 14 zugeordnet ist, verringert oder die Drehzahl des Hauptantriebes 29 erhöht. Dadurch wird erreicht, daß die Drehzahlreglereinheit 40 bei Erhalt eines Signals von der Detektoreinheit 39 die Schweißdrahtfördervorrichtungen 27, 28 derart regelt, daß die Förderkraft bzw. die Druckkraft auf den Schweißdraht 13 verringert bzw. begrenzt wird und somit das Ausweichen bzw. die Auslenkung des Schweißdrahtes 13 im Rohrsensor 31 aufgehoben wird.

Von der Detektoreinheit 39 wird ein Signal an die Drehzahlreglereinheit 40 übersandt, wenn der Schweißdraht 13 im Inneren des Sensors, insbesondere des Rohrsensors 31, derartig ausgelenkt wird, daß dieser das Gehäuse 35 des Sensors, insbesondere des Rohrsensors 31, berührt und somit ein Kurzschluß zwischen der auf den Schweißdraht 13 einwirkenden Schweißdrahtfördervorrichtung 27, insbesondere dem Antriebselement 34, und dem Gehäuse 35 des Sensors, insbesondere des Rohrsensors 31, durch den Schweißdraht 13 erzeugt wird, sodaß die Drehzahlreglereinheit 40 mit der Verringerung bzw. Begrenzung der Förderkraft beginnen kann. Die Regelung des Hilfsantriebes 30 kann mit allen aus dem Stand der Technik bekannten Verfahren durchgeführt werden.

Dabei ist es beispielsweise möglich, daß die Drehzahlregelung von der Drehzahlreglereinheit 40 für den Hilfsantrieb 30 so lange erfolgt, bis von der Detektoreinheit 39 kein Signal mehr übersandt wird, also der Kurzschluß aufgehoben ist, oder die Regelung in Abhängigkeit einer voreinstellbaren Zeitdauer erfolgt, d.h., daß die Drehzahl über einen vorgegebenen und gespeicherten Kurvenverlauf über eine bestimmte Zeitdauer verändert wird. Nachdem entsprechend dem verwendeten Regelverfahren die Begrenzung bzw. Kompensation der Förderkraft im Schweißdraht 13 aufgehoben wurde, wird von der Drehzahlreglereinheit 40 die Drehzahl bzw. die Drahtvorschubgeschwindigkeit des Hilfsantriebes 30 wieder geringfügig erhöht, sodaß bei neuerlichem Auftreten eines Kurschlusses eine weitere Regelung durchgeführt wird. Durch ein derartiges Vorgehen wird erreicht, daß sich für die unterschiedlichsten Schweißdrähte 13 eine optimale Förderkraft einstellt, da die anschließende Erhöhung der Drehzahl für den Hilfsantrieb 30 nicht mehr auf die ursprüngliche, nach dem Start des Schweißprozesses vorhandene Drehzahl geregelt wird, sondern diese gegenüber der Drehzahl, die gerade bei der Aufhebung des Kurzschlusses verwendet wurde, geringfügig entsprechend eines vorgegebenen bzw. voreingestellten Wertes erhöht wird.

Weiters ist es durch eine derartige Erfassung des Förderdruckes auch möglich, daß aufgrund der Dimensionierung des Sensors, insbesondere des Gehäuses 35 des Rohrsensors 31, eine entsprechende Förderkraft eingestellt bzw. zugelassen werden kann, da der Schweißdraht 13 entsprechend weit ausgelenkt werden muß, um den gewünschten Kurzschluß herzustellen.

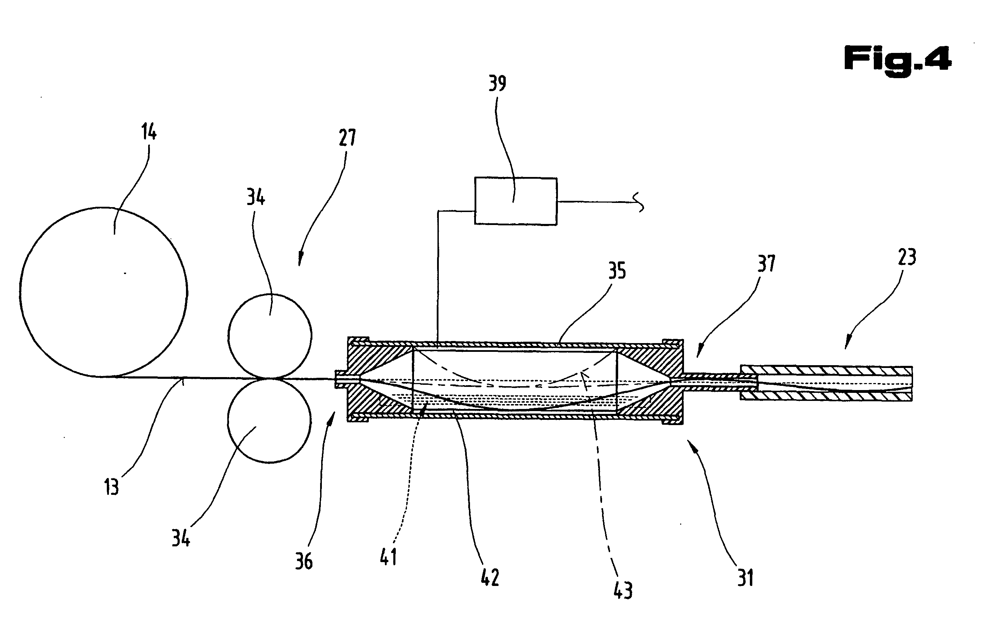

In Fig. 4 ist ein Ausführungsbeispiel für den Rohrsensor 31 gemäß der Erfindung dargestellt, wobei das Funktionsprinzip den zuvor beschriebenen Figuren entspricht.

Dabei ist der Rohrsensor 31 nunmehr derartig ausgebildet, daß im Innenraum des Gehäuses 35 Elemente angeordnet sind, mit denen die Auslenkung bzw. die Förderkraft auf den Schweißdraht 13 erfaßt werden kann. Dabei ist es beispielsweise möglich, daß im Inneren, insbesondere im Innenraum, des Sensors, insbesondere des Rohrsensors 31, zumindest eine Lichtschranke 41, wie mit strichlierten Linien eingezeichnet, angeordnet wird, wobei über diese die Ablenkung des Schweißdrahtes 13 von der Mittellage des Sensors, insbesondere des Rohrsensors 31, ermittelt wird, d.h., daß durch Anordnung zumindest eines lichtaussendenden Elementes und eines lichtempfindlichen Elementes die Lichtschranke 41 aufgebaut werden kann und somit bei einer Auslenkung des Schweißdrahtes 13 aufgrund einer zu hohen Förderkraft diese Lichtschranke 41 unterbrochen wird, sodaß ein Signal von der Detektoreinheit 39 an die Drehzahlreglereinheit 40 für die Ansteuerung der Schweißdrahtfördervorrichtungen 27, 2 8 gesandt wird.

Bei dem dargestellten Ausführungsbeispiel der Erfindung ist die Detektoreinheit 39 mit den Elementen des Rohrsensors 31 verbunden, welche bei Aktivierung ein Signal bilden, sodaß die weitere Verbindung des Rohrsensors 31 mit den Hilfsantrieb 30 entfallen kann. Bei einer Ausbildung mit Lichtschranken 41 im Gehäuse 35 des Sensors ist es möglich, mehrere derartige Lichtschranken anzuordnen, sodaß das Auslenken des Schweißdrahtes 13 über einen größeren Bereich überwacht werden kann.

Weiters ist es möglich, daß anstelle oder zusätzlich zu den Lichtschranken 41 im Inneren, insbesondere im Innenraum, des Sensors, insbesondere des Rohrsensors 31, zumindest ein Druckelement 42 angeordnet wird, welches bei Berührung ein zu einer Berührungskraft proportionales elektrisches Signal abgibt und somit wiederum die Auslenkung des Schweißdrahtes 13 erfaßt werden kann.

Durch diese Art der Erfassung der Auslenkung ist es nicht erforderlich, daß das Gehäuse 35 des Sensors rohrförmig ausgebildet wird. Damit jedoch sichergestellt ist, daß der Schweißdraht 13 bei Übersteigen der Förderkraft bzw. der Druckkraft in eine bestimmte Richtung, in der die Elemente, wie der Lichtschranken 41 und/oder die Druckelemente 42, angeordnet sind, ausgelenkt wird, wird bevorzugt im Innenraum des Gehäuses 35 eine Ablenkvorrichtung 43, wie schematisch mit strichpunktierten Linien eingezeichnet, angeordnet. Die Ablenkvorrichtung 43 hat die Aufgabe, den Schweißdraht 13 bereits bei optimaler Förderkraft aus der Mittellage, strichliert angedeutet, des Gehäuses 35 zu drucken, sodaß eine Richtungsvorgabe für die Auslenkung des Schweißdrahtes 13 erreicht wird. Dabei ist es selbstverständlich möglich, daß dazu kein geschlossenes Gehäuse 35 mehr notwendig ist, sondern daß der Schweißdraht 13 ebenso frei verlaufend über die Ablenkvorrichtung 43 geführt werden kann und an der gegenüberliegenden Seite die Elemente angeordnet werden.

Weiters ist in dem dargestellten Ausführungsbeispiel der Fig. 4 eine besondere Ausbildung der Drahteinlaufführung 36 und der Drahtauslaufführung 37 dargestellt. Diese weisen dabei einen sich erweiternden Verlauf in Richtung des Innenraumes des Gehäuses 35 des Sensors auf, sodaß beim Drahteinfädeln der Schweißdraht 13 derart abgelenkt wird, daß dieser ohne zusätzliche Hilfsmittel durch den Sensor geführt werden kann.

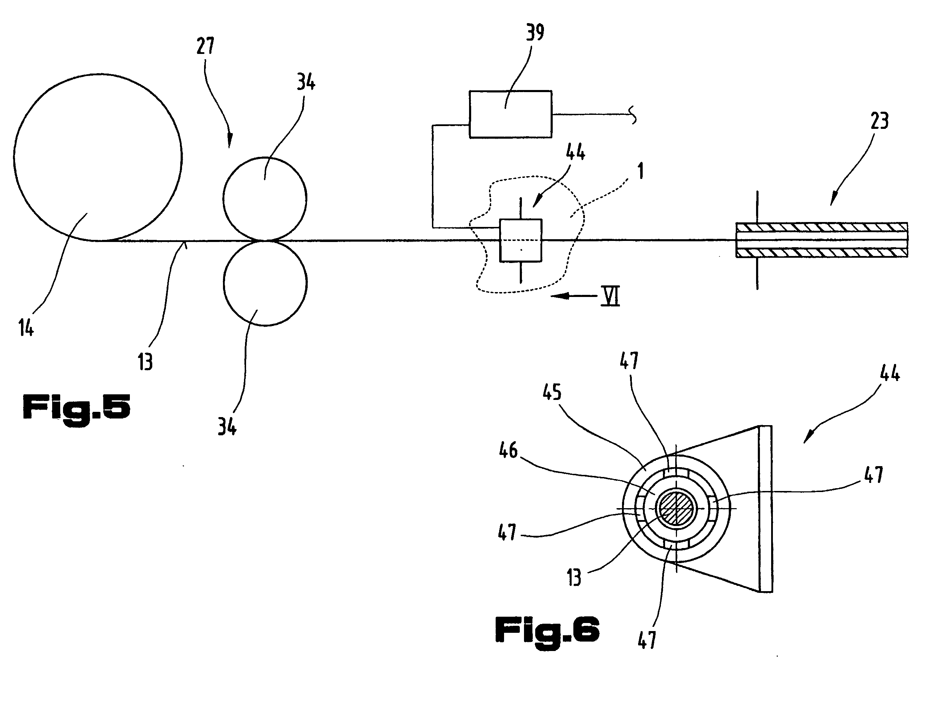

In den Fig. 5 und 6 ist ein anderes Ausführungsbeispiel für die Erfassung bzw. Ermittlung der Auslenkung des Schweißdrahtes 13 dargestellt. Dabei wird der Sensor nunmehr durch einen Drucksensor 44, welcher am Gehäuse des Schweißgerätes 1 befestigt ist, gebildet, wobei der Schweißdraht 13 wiederum durch den Drucksensor 44 geführt wird. Der Drucksensor 44 ist derartig aufgebaut, daß dieser aus einem äußeren und einem inneren Ring 45, 46 mit dazwischen liegenden Druckelementen 47 besteht, wobei nunmehr der Innendurchmesser des inneren Ringes 46 nur unwesentlich größer als der Außendurchmesser des Schweißdrahtes 13 ist bzw. beim Einsatz einer Seele für die Führung des Schweißdrahtes 13 der Innendurchmesser des Ringes 46 geringfügig größer ist als der Außendurchmesser der Seele.

Die Verwendung einer Seele für die Führung des Schweißdrahtes 13 im Bereich des Sensors ist in allen Ausführungsbeispielen der Fig. 4 bis 6 möglich, bei denen keine Kurzschlußbildung zwischen dem Schweißdraht 13 und dem Gehäuse 35 des Sensors notwendig ist.

Durch einen derartigen Aufbau des Sensors, insbesondere des Drucksensors 44, wird erreicht, daß ein teilweises oder ansatzweises Auslenken des Schweißdrahtes 13 aus seiner Normallage an zumindest einer Detektorstelle im Bereich zwischen den Schweißdrahtfördervorrichtungen 27, 28 durch den Sensor, insbesondere den Drucksensor 44, erfaßt wird.

Dabei kann jedoch der Schweißdraht 13 aufgrund der engen Führung im Drucksensor nicht aus seiner Förderlage abweichen, sodaß nur ein ansatzweises Auslenken erfaßt bzw. festgestellt werden kann. Diese hat den Vorteil, daß es dabei zu keinen Verletzungen bzw. Knikkungen der Oberfläche des Schweißdrahtes 13 kommen kann.

Die spezielle Ausbildung des Drucksensors 44, der um den Schweißdraht 13 geführt bzw. umgreifend angeordnet ist, hat den Vorteil, daß der Schweißdraht 13 im Drucksensor 44 eine beliebige Richtung auslenken kann, aber nur eine geringe Anzahl von Druckelementen 47 notwendig ist, da durch den inneren Ring 46 die entstehenden Druckkräfte durch den Schweißdraht 13 auf die vorhandenen Druckelemente 47 aufgeteilt werden. Ein weiterer Vorteil eines derartigen Drucksensors 44 liegt darin, daß eine ständige bzw. kontinuierliche Überwachung des Schweißdrahtes 13 durchgeführt werden kann, da die Verstellwege bzw. Abweichwege des Schweißdrahtes 13 minimal sind und somit der Schweißdraht 13 mit einer maximalen Förderkraft gefördert werden kann.

Abschließend sei darauf hingewiesen, daß in den zuvor beschriebenen Ausführungsbeispielen die einzelnen Teile bzw. Bauelemente oder Baugruppen schematisch bzw. vereinfacht dargestellt sind. Des weiteren können auch einzelne Teile der zuvor beschriebenen Merkmalskombinationen der einzelnen Ausführungsbeispiele in Verbindung mit anderen Einzelmerkmalen aus anderen Ausführungsbeispielen eigenständige, erfindungsgemäße Lösungen bilden.

### Bezugszeichenaufstellung

- 1: Schweißgerät
- 2: Stromquelle
- 3: Leistungsteil
- 4: Steuervorrichtung
- 5: Umschaltglied

- 6: Steuerventil
- 7: Versorgungsleitung
- 8: Gas
- 9: Gasspeicher
- 10: Schweißbrenner

- 11: Drahtvorschubgerät
- 12: Versorgungsleitung
- 13: Schweißdraht
- 14: Drahtvorrat
- 15: Lichtbogen

- 16: Werkstück
- 17: Versorgungsleitung
- 18: Versorgungsleitung
- 19: Kühlkreislauf
- 20: Strömungswächter

- 21: Wasserbehälter
- 22: Ein- und/oder Ausgabevorrichtung
- 23: Schlauchpaket
- 24: Verbindungsvorrichtung
- 25: Zugentlastungsvorrichtung

- 26: Gehäuse
- 27: Schweißdrahtfördervorrichtung
- 28: Schweißdrahtfördervorrichtung
- 29: Hauptantrieb
- 30: Hilfsantrieb

- 31: Rohrsensor
- 32: Antriebsmotor
- 33: Antriebsmotor
- 34: Antriebselement
- 35: Gehäuse

- 36: Drahteinlaufführung
- 37: Drahtauslaufführung
- 38: Innendurchmesser
- 39: Detektoreinheit
- 40: Drehzahlreglereinheit

- 41: Lichtschranke
- 42: Druckelement
- 43: Ablenkvorrichtung
- 44: Drucksensor
- 45: Ring

- 46: Ring
- 47: Druckelement

## Patentansprüche

1. Verfahren zum Fördern von Schweißdraht (13) von einem Drahtvorrat (14) zu einem Schweißbrenner (10), mit zumindest einer Schweißdrahtfördervorrichtung (27) und einer weiteren Schweißdrahtfördervorrichtung (28) zum Aufbringen einer in Förderrichtung auf den Schweißdraht (13) einwirkenden Förderkraft, z.B. einer Druckkraft, die in einer Drahtzuführung zwischen der Schweißdrahtfördervorrichtung (27) und der weiteren Schweißdrahtfördervorrichtung (28) direkt über einen Sensor erfaßt wird, **dadurch gekennzeichnet, daß** eine Bewegung des Schweißdrahtes (13) quer zu seiner Förderrichtung, insbesondere ein Auslenken oder ansatzweises Auslenken aus der Förderrichtung, aufgrund der Förderkraft bei Überschreiten der Eigensteifigkeit des Schweißdrahtes zwischen der Schweißdrahtfördervorrichtung (27) und der weiteren Schweißdrahtfördervorrichtung (28) durch den als Rohrsensor (31) gebildeten Sensor erfaßt wird und in Abhängigkeit von einem Ausmaß der Querbewegung des Schweißdrahtes im Inneren des Rohrsensors (31) die Förderkraft und/oder -geschwindigkeit zumindest der Schweißdrahtfördervorrichtung (27) und/oder der weiteren Schweißdrahtfördervorrichtung (28) verändert wird, wobei in einem Gehäuse des Rohrsensors (31) eine Ablenkvorrichtung (43) für den Schweißdraht (13) angeordnet ist, die den Schweißdraht (13) aus einer geradlinigen Mittellage in eine bestimmte Richtung ablenkt, sodass bei Übersteigen der notwendigen Förderkraft auf den Schweißdraht (13) eine Richtungsvorgabe für die Auslenkung des Schweißdrahtes (13) erreicht wird.

2. Verfahren nach Anspruch 1, **dadurch gekennzeichnet, daß** in Abhängigkeit von einem Ausmaß der Querbewegung die Förderkraft und/oder -geschwindigkeit zumindest der Schweißdrahtfördervorrichtung (27) und/oder der weiteren Schweißdrahtfördervorrichtung (28) geregelt wird.

3. Verfahren nach Anspruch 1 oder 2, **dadurch gekennzeichnet, daß** das Ausmaß der Querbewegung durch einen Soll-/Istvergleich festgelegt wird.

4. Verfahren nach Anspruch 3, **dadurch gekennzeichnet, daß** der Sollwert als Wert innerhalb jenes Bereiches festgelegt wird, in dem der Sensor kein Signal detektiert.

5. Verfahren nach einem der vorhergehenden Ansprüche, **dadurch gekennzeichnet, daß** die Schweißdrahtfördervorrichtung (27) als Hauptantrieb (29) ausgebildet und bevorzugt mit einer konstanten Drehzahl angetrieben wird und die weitere Schweißdrahtfördervorrichtung (28) als Hilfsantrieb (30) ausgebildet und mit einer veränderbaren bzw. geregelten Drehzahl angetrieben wird.

6. Verfahren nach Anspruch 5, **dadurch gekennzeichnet, daß** die Drehzahl der weiteren Schweißdrahtfördervorrichtung (28) mit einer Drehzahlreglereinheit (40) geregelt wird.

7. Verfahren nach Anspruch 5 oder 6, **dadurch gekennzeichnet, daß** die Förderkraft, z.B. die Druckkraft, zwischen dem Hauptantrieb (29) und dem Hilfsantrieb (30) vom Rohrsensor (31) erfaßt wird.

8. Verfahren nach einem der vorhergehenden Ansprüche, **dadurch gekennzeichnet, daß** die Erfassung der Förderkraft vom Rohrsensor (31) quer zur Förderrichtung des Schweißdrahtes (13) erfolgt.

9. Verfahren nach einem der vorhergehenden Ansprüche, **dadurch gekennzeichnet, daß** die Drehzahl bzw. eine Drahtvorschubgeschwindigkeit des Hilfsantriebes (30) zumindest zeitweise höher ist als die Drehzahl bzw. die Drahtvorschubgeschwindigkeit des Hauptantriebes (29) am Schweißbrenner (10).

10. Verfahren nach einem der vorhergehenden Ansprüche, **dadurch gekennzeichnet, daß** eine Drehzahlreglereinheit (40) bei Erhalt des Signals von einer Detektoreinheit (39) die Drehzahl des Hilfsantriebes (30) verringert wird.

11. Verfahren nach einem der vorhergehenden Ansprüche, **dadurch gekennzeichnet, daß** eine Drehzahlreglereinheit (40) bei Erhalt des Signals von einer Detektoreinheit (39) die weitere Schweißdrahtfördervorrichtung (28) derart regelt, daß die Förderkraft bzw. die Druckkraft auf den Schweißdraht (13) verringert bzw. begrenzt wird.

12. Verfahren nach einem der Ansprüche 10 oder 11, **dadurch gekennzeichnet, daß** von der Detektoreinheit (39) ein Signal an die Drehzahlreglereinheit (40) übersandt wird, wenn der Schweißdraht (13) im Inneren des Rohrsensors (31) derartig ausgelenkt wird, daß dieser das Gehäuse (26) des Rohrsensors (31) berührt und somit ein Kurzschluß zwischen einem Antriebselement (34) der Schweißdrahtfordervorrichtung (27, 28) und dem Gehäuse (35) durch den Schweißdraht (13) erzeugt wird.

13. Verfahren nach einem der vorhergehenden Ansprüche, **dadurch gekennzeichnet, daß** ein teilweises oder ansatzweises Auslenken des Schweißdrahtes (13) an zumindest einer Detektorstelle im Bereich zwischen der Schweißdrahtfördervorrichtung (27) und der weiteren Schweißdrahtfördervorrichtung (28) durch den Sensor erfaßt wird.

14. Vorrichtung zum Fördern von Schweißdraht (13) von einem Drahtvorrat (14) zu einem Schweißbrenner (10), bestehend aus einer Schweißdrahtfördervorrichtung (27), einer weiteren Schweißdrahtfördervorrichtung (28) zum Aufbau einer Förderkraft und einem Sensor zur Erfassung der Förderkraft bzw. der Druckkraft am Schweißdraht (13), wobei dem Drahtvorrat (14) die Schweißdrahtfördervorrichtung (27) und dem Schweißbrenner (10) die weitere Schweißdrahtfördervorrichtung (28) zum Aufbau einer Förderkraft zugeordnet ist, wobei die Drahtförderung von dem Drahtvorrat (14) zu dem Schweißbrenner (10) über ein Schlauchpaket (23) oder eine Führungsvorrichtung, insbesondere eine im Schlauchpaket (23) oder in der Führungsvorrichtung angeordnete Seele, erfolgt und dem Schweißdraht (13) zur Ermittlung einer Schwankung der Förderkraft, z.B. einer Druckkraft, auf den Schweißdraht (13) der Sensor zugeordnet ist, **dadurch gekennzeichnet, daß** der Sensor durch einen Rohrsensor (31) gebildet ist, der zwischen der Schweißdrahtfördervorrichtung (27) und der weiteren Schweißdrahtfördervorrichtung (28) angeordnet ist und zur Ermittlung eines Auslenkens oder eines ansatzweisen Auslenkens bei Überschreitung der Eigensteifigkeit des Schweißdrahtes (13) aus einer Förderrichtung im Inneren des Rohrsensors (31) dient, wobei in einem Gehäuse des Rohrsensors (31) eine Ablenkvorrichtung (43) für den Schweißdraht (13) angeordnet ist, die den Schweißdraht (13) aus einer geradlinigen Mittellage in eine bestimmte Richtung ablenkt, sodass bei Übersteigen der notwendigen Förderkraft auf den Schweißdraht (13) eine Richtungsvorgabe für die Auslenkung des Schweißdrahtes (13) erreicht wird

15. Vorrichtung nach Anspruch 14, **dadurch gekennzeichnet, daß** die Schweißdrahtfördervorrichtung (27) als Hilfsantrieb (30) und die weitere Schweißdrahtfördervorrichtung (28) als Hauptantrieb (29) ausgebildet sind.

16. Vorrichtung nach Anspruch 14 oder 15, **dadurch gekennzeichnet, daß** der Rohrsensor (31) in Förderrichtung des Schweißdrahtes (13) angeordnet ist.

17. Vorrichtung nach einem der Ansprüche 14 bis 16, **dadurch gekennzeichnet, daß** die Schweißdrahtfördervorrichtung (27) und/oder die weitere Schweißdrahtfördervorrichtung (28) aus einem Antriebsmotor (32, 33) und zumindest einem auf den Schweißdraht (13) einwirkenden Antriebselement (34), insbesondere Antriebsrollen, gebildet sind.

18. Vorrichtung nach einem der Ansprüche 14 bis 17, **dadurch gekennzeichnet, daß** das Gehäuse (35) durch ein durch ein Rohr bzw. ein rohrförmiges Element gebildet ist.

19. Vorrichtung nach Anspruch 18, **dadurch gekennzeichnet, daß** das Rohr des Rohrsensors (31) aus einem elektrisch leitenden Material gebildet ist und ein Innendurchmesser des Rohres größer ist als ein Außendurchmesser des Schweißdrahtes (13).

20. Vorrichtung nach einem der Ansprüche 14 bis 19, **dadurch gekennzeichnet, daß** der Rohrsensor (31) bzw. das Gehäuse (35) des Rohrsensors (31) mit einer Detektoreinheit (39) verbunden ist, die wiederum mit der Schweißdrahtfördervorrichtung (27) und/oder der weiteren Schweißdrahtfördervorrichtung (28), insbesondere mit dem Hilfsantrieb (30), bevorzugt mit dem Antriebselement (34) elektrisch leitend verbunden ist.

21. Vorrichtung nach Anspruch 20, **dadurch gekennzeichnet, daß** die Detektoreinheit (39) mit einer der Schweißdrahtfördervorrichtungen (27) und/oder einer der weiteren Schweißdrahtfördervorrichtung (28) zugeordneten Drehzahlreglereinheit (40) verbunden ist.

22. Drahtfördersystem zum Fördern und Überwachen eines Schweißdrahtes (13) von einem Drahtvorrat (14) zu einem Schweißbrenner (10), **dadurch gekennzeichnet, daß** das Drahtfördersystem durch eine Vorrichtung nach einem der Ansprüche 14 bis 21 ausgebildet ist.

## Claims

1. Method of feeding welding wire (13) from a wire supply (14) to a welding torch (10), using at least one welding wire feeder (27) and another welding wire feeder (28), for applying a feed force, e.g. a pressure force, acting on the welding wire (13) in the feed direction, which is detected in a wire feed system between the welding wire feeder (27) and the other welding wire feeder (28) directly by means of a sensor, **characterised in that** a displacement of the welding wire (13) transversely to its feed direction, in particular a deflection or a lateral displacement away from the feed direction, caused by the pressure force when the natural stiffness of the welding wire is exceeded between the welding wire feeder (27) and the other welding wire feeder (28) is detected by means of the sensor provided in the form of a tubular sensor (31), and the feed force and/or feed rate of at least the welding wire feeder (27) and/or the other welding wire feeder (28) is varied depending on the extent of the transverse displacement in the interior of the tubular sensor (31), and a deflector device (43) for the welding wire (13) is disposed in a housing of the tubular sensor (31) which deflects the welding wire (13) in a specific direction away from a straight central position so that when the required feeding force acting on the welding wire (13) is exceeded a direction is pre-set for the deflection of the welding wire (13).

2. Method as claimed in claim 1, **characterised in that** the feed force and/or feed rate of at least the welding wire feeder (27) and/or the other welding wire feeder (28) is regulated depending on the extent of the transverse displacement.

3. Method as claimed in claim 1 or 2, **characterised in that** the extent of the transverse displacement is determined on the basis of a desired/actual comparison.

4. Method as claimed in claim 3, **characterised in that** the desired value is fixed as a value in the range within which the detection means does not detect a signal.

5. Method as claimed in one of the preceding claims, **characterised in that** the welding wire feeder (27) is a main drive (29) and is preferably driven at a constant speed and the other welding wire feeder (28) is an auxiliary drive (30) and is driven at a variable and controllable speed.

6. Method as claimed in claim 5, **characterised in that** the speed of the other welding wire feeder (28) is regulated by a speed regulator unit (40).

7. Method as claimed in one of claims 5 or 6, **characterised in that** the feed force, e.g. the pressure force, between the main drive (29) and the auxiliary drive (30) is detected by the tubular sensor (31).

8. Method as claimed in one of the preceding claims, **characterised in that** the feed force is detected by the tubular sensor (31) transversely to the feed direction of the welding wire (13).

9. Method as claimed in one of the preceding claims, **characterised in that** the speed or a wire feed rate of the auxiliary drive (30) is higher than the speed or feed rate of the main drive (29) at the welding torch (10), at least at certain times.

10. Method as claimed in one of the preceding claims, **characterised in that** a speed regulator unit (40) reduces the speed of the auxiliary drive (30) on receiving the signal from a detector unit (39).

11. Method as claimed in one of the preceding claims, **characterised in that** on receiving a signal from a detector unit (39), a speed regulator unit (40) regulates the other welding wire feeder (28) so that the feed force or the pressure force on the welding wire (13) is reduced or limited.

12. Method as claimed in one of claims 10 or 11, **characterised in that** a signal is transmitted from the detector unit (39) to the speed regulator unit (40) when the welding wire (13) in the interior of the tubular sensor (31) is deflected so that it comes into contact with the housing (26) of the tubular sensor (31) and a short circuit is therefore generated by the welding wire (13) between a drive element (34) of the welding wire feeder (27, 28) and the housing (35).

13. Method as claimed in one of the preceding claims, **characterised in that** a partial or lateral deflection of the welding wire (13) is detected by the sensor on at least one point of the detector in the region between the welding wire feeder (27) and the other welding wire feeder (28).

14. Device for feeding welding wire (13) from a wire supply (14) to a welding torch (10), consisting of a welding wire feeder (27), another welding wire feeder (28) for building up a feed force and a sensor for detecting the feed force or pressure force on the welding wire (13), wherein the welding wire feeder (27) co-operates with the wire supply (14) and the other welding wire feeder (28) co-operates with the welding torch (10) to build up a feed force, the wire being fed from the wire supply (14) to the welding torch (10) through a hose pack (23) or a guide system, in particular a core disposed in the hose pack (23) or in the guide system, and the sensor co-operates with the welding wire (13) in order to detect a fluctuation in the feed force, e.g. a pressure force, on the welding wire (13), **characterised in that** the sensor is a tubular sensor (31) disposed between the welding wire feeder (27) and the other welding wire feeder (28) and is used to detect a deflection or a lateral deflection away from a feed direction in the interior of the tubular sensor (31) when the natural stiffness of the welding wire (13) is exceeded, wherein a deflector device (43) for the welding wire (13) is disposed in a housing of the tubular sensor (31) which deflects the welding wire (13) in a specific direction out of a straight centre position so that when the required feed force on the welding wire (13) is exceeded, a direction is pre-set for the deflection of the welding wire (13).

15. Device as claimed in claim 14, **characterised in that** the welding wire feeder (27) is an auxiliary drive (30) and the other welding wire feeder (28) is a main drive (29).

16. Device as claimed in claim 14 or 15, **characterised in that** the tubular sensor (31) is disposed in the feed direction of the welding wire (13).

17. Device as claimed in one of claims 14 to 16, **characterised in that** the welding wire feeder (27) and/or the other welding wire feeder (28) are provided in the form of a drive motor (32, 33) and at least one drive element (34), in particular drive rollers, acting on the welding wire (13).

18. Device as claimed in one of claims 14 to 17, **characterised in that** the housing (35) is provided in the form of a tube or a tubular element.

19. Device as claimed in claim 18, **characterised in that** the tube of the tubular sensor (31) is made from an electrically conductive material and an internal diameter of the tube is bigger than an external diameter of the welding wire (13).

20. Device as claimed in one of claims 14 to 19, **characterised in that** the tubular sensor (31) or the housing (3 5) of the tubular sensor (31) is connected to a detector unit (39), which is in turn connected to the welding wire feeder (27) and/or the other welding wire feeder (28), in particular the auxiliary drive (30), preferably the drive element (34), in an electrically conducting arrangement.

21. Device as claimed in claim 20, **characterised in that** the detector unit (39) is connected to one of the welding wire feeders (27) and/or a speed regulator unit (40) co-operating with the other welding wire feeder (28).

22. Wire feed system for monitoring and feeding a welding wire (13) from a wire supply (14) to a welding torch (10), **characterised in that** the wire feed system is a device as claimed in one of claims 14 to 21.

## Revendications

1. Procédé d'acheminement d'un fil d'apport (13) d'une réserve de fil (14) à un chalumeau de soudage (10), avec au moins un dispositif de convoyage de fil d'apport (27) et un autre dispositif de convoyage de fil d'apport (28) pour l'application d'une force de convoyage agissant dans la direction de convoyage sur le fil d'apport (13), par exemple une force de pression, qui est détectée dans une amenée de fil entre le dispositif de convoyage de fil d'apport (27) et l'autre dispositif de convoyage de fil d'apport (28) directement par un capteur, **caractérisé en ce qu'**un déplacement du fil d'apport (13) transversalement à sa direction de convoyage, en particulier une déviation ou bien un début de déviation de la direction de convoyage, en raison de la force de convoyage, lors du dépassement de la rigidité propre du fil d'apport entre le dispositif de convoyage de fil d'apport (27) et l'autre dispositif de convoyage de fil d'apport (28) est détecté par le capteur réalisé comme capteur tubulaire (31) et, en fonction du degré du mouvement transversal du fil d'apport, dans l'intérieur du capteur tubulaire (31), la force de convoyage et/ou la vitesse de convoyage au moins du dispositif de convoyage de fil d'apport (27) et/ou de l'autre dispositif de convoyage de fil d'apport (28) est modifiée, où est disposé dans un boîtier du capteur tubulaire (31) un dispositif de déviation (43) du fil d'apport (13) qui dévie le fil d'apport (13) d'une position médiane rectiligne en une direction déterminée de manière à obtenir, lors du dépassement de la force de convoyage nécessaire, sur le fil d'apport (13) une consigne de direction pour la déviation du fil d'apport (13).

2. Procédé selon la revendication 1, **caractérisé en ce qu'**en fonction d'un degré du mouvement transversal, la force de convoyage et/ou la vitesse de convoyage au moins du dispositif de convoyage de fil d'apport (27) et/ou de l'autre dispositif de convoyage de fil d'apport (28) est réglée.

3. Procédé selon la revendication 1 ou 2, **caractérisé en ce que** le degré du mouvement transversal est fixé par une comparaison des valeurs de consigne/réelle.

4. Procédé selon la revendication 3, **caractérisé en ce que** la valeur de consigne est fixée comme valeur à l'intérieur de la zone dans laquelle le capteur ne détecte pas de signal.

5. Procédé selon l'une des revendications précédentes, **caractérisé en ce que** le dispositif de convoyage de fil d'apport (27) est réalisé comme organe d'entraînement principal (29) et est entraîné de préférence à une vitesse de rotation constante, et **en ce que** l'autre dispositif de convoyage de fil d'apport (28) est réalisé comme organe d'entraînement auxiliaire (30) et est entraîné à une vitesse de rotation modifiable respectivement réglée.

6. Procédé selon la revendication 5, **caractérisé en ce que** la vitesse de rotation de l'autre dispositif de convoyage de fil d'apport (28) est réglée avec une unité de réglage (40) du nombre de tours.

7. Procédé selon l'une des revendications 5 ou 6, **caractérisé en ce que** la force de convoyage, par exemple la force de pression, est détectée entre l'organe d'entraînement principal (29) et l'organe d'entraînement auxiliaire (30) par le capteur tubulaire (31).

8. Procédé selon l'une des revendications précédentes, **caractérisé en ce que** la détection de la force de convoyage a lieu par le capteur tubulaire (31) transversalement à la direction de convoyage du fil d'apport (13).

9. Procédé selon l'une des revendications précédentes, **caractérisé en ce que** la vitesse de rotation respectivement une vitesse de poussée de fil de l'organe d'entraînement auxiliaire (30) est au moins par moments plus élevée que la vitesse de rotation respectivement la vitesse de poussée de fil de l'organe d'entraînement principal (29) au chalumeau (10).

10. Procédé selon l'une des revendications précédentes, **caractérisé en ce qu'**une unité de réglage (40) du nombre de tours, lors de la réception du signal d'une unité de détection (39), diminue le nombre de tours de l'organe d'entraînement auxiliaire (30).

11. Procédé selon l'une des revendications précédentes, **caractérisé en ce qu'**une unité de réglage (40) du nombre de tours, lors de la réception du signal d'une unité de détection (39), règle l'autre dispositif de convoyage de fil d'apport (28) de façon que la force de convoyage respectivement la force de pression sur le fil d'apport (13) soit diminuée respectivement limitée.

12. Procédé selon l'une des revendications 10 ou 11, **caractérisé en ce que** l'unité de détection (39) transmet un signal à l'unité de réglage (40) du nombre de tours lorsque le fil d'apport (13) est dévié à l'intérieur du capteur tubulaire (31) de telle sorte que celui-ci vient en contact avec le boîtier (26) du capteur tubulaire (31) et qu'il est ainsi produit un court-circuit entre un élément d'entraînement (34) du dispositif de convoyage de fil d'apport (27, 28) et le boîtier (35) par le fil d'apport (13).

13. Procédé selon l'une des revendications précédentes, **caractérisé en ce qu'**une déviation partielle ou un début de déviation du fil d'apport (13) est détectée par le capteur à au moins un emplacement de détection dans la zone entre le dispositif de convoyage de fil d'apport (27) et l'autre dispositif de convoyage de fil d'apport (28).

14. Dispositif d'acheminement d'un fil d'apport (13) d'une réserve de fil (14) à un chalumeau de soudage (10), constitué d'un dispositif de convoyage de fil d'apport (27), d'un autre dispositif de convoyage de fil d'apport (28) pour produire une force de convoyage et d'un capteur pour détecter la force de convoyage respectivement la force de pression au fil d'apport (13), où est associé à la réserve de fil (14) le dispositif de convoyage de fil d'apport (27) et au chalumeau de soudage (10) l'autre dispositif de convoyage de fil d'apport (28) pour produire une force de convoyage, où le convoyage du fil depuis la réserve de fil (14) au chalumeau (10) a lieu par un paquet tubulaire (23) ou un dispositif de guidage, en particulier une âme disposée dans le paquet tubulaire (23) ou dans le dispositif de guidage, et qu'il est associé au fil d'apport (13) pour déterminer une oscillation de la force de convoyage, par exemple d'une force de pression, exercée sur le fil d'apport (13), le capteur, **caractérisé en ce que** le capteur est formé par un capteur tubulaire (31) qui est disposé entre le dispositif de convoyage de fil d'apport (27) et l'autre dispositif de convoyage de fil d'apport (28) et sert à déterminer une déviation ou un début de déviation lors du dépassement de la rigidité propre du fil d'apport (13) d'une direction de convoyage à l'intérieur du capteur tubulaire (31), où est disposé dans un boîtier du capteur tubulaire (31) un dispositif de déviation (43) pour le fil d'apport (13) qui dévie le fil d'apport (13) d'une position médiane rectiligne en une direction déterminée de sorte que lors du dépassement de la force de convoyage nécessaire sur le fil d'apport (13), une consigne de direction pour la déviation du fil d'apport (13) est obtenue.

15. Dispositif selon la revendication 14, **caractérisé en ce que** le dispositif de convoyage de fil d'apport (27) est réalisé comme organe d'entraînement auxiliaire (30), et l'autre dispositif de convoyage de fil d'apport (28), comme organe d'entraînement principal (29).

16. Dispositif selon la revendication 14 ou 15, **caractérisé en ce que** le capteur tubulaire (31) est disposé dans la direction de convoyage du fil d'apport (13).

17. Dispositif selon l'une des revendications 14 à 16, **caractérisé en ce que** le dispositif de convoyage de fil d'apport (27) et/ou l'autre dispositif de convoyage de fil d'apport (28) sont formés par un moteur d'entraînement (32, 33) et au moins un élément d'entraînement (34) agissant sur le fil d'apport (13), en particulier des rouleaux d'entraînement.

18. Dispositif selon l'une des revendications 14 à 17, **caractérisé en ce que** le boîtier (35) est formé par un tube respectivement un élément tubulaire.

19. Dispositif selon la revendication 18, **caractérisé en ce que** le tube du capteur tubulaire (31) est réalisé en un matériau électriquement conducteur et qu'un diamètre intérieur du tube est plus grand que le diamètre extérieur du fil d'apport (13).

20. Dispositif selon l'une des revendications 14 à 19, **caractérisé en ce que** le capteur tubulaire (31) respectivement le boîtier (35) du capteur tubulaire (31) est relié à une unité de détection (39) qui est reliée à son tour d'une manière électriquement conductrice au dispositif de convoyage de fil d'apport (27) et/ou à l'autre dispositif de convoyage de fil d'apport (28), en particulier à l'organe d'entraînement auxiliaire (30), de préférence à l'élément d'entraînement (34).

21. Dispositif selon la revendication 20, **caractérisé en ce que** l'unité de détection (39) est reliée à une unité de réglage (40) du nombre de tours associée au dispositif de convoyage de fil d'apport (27) et/ou à l'autre dispositif de convoyage de fil d'apport (28).

22. Système d'acheminement de fil pour convoyer et surveiller un fil d'apport (13) d'une réserve de fil (14) à un chalumeau (10), **caractérisé en ce que** le système de convoyage de fil est réalisé par un dispositif selon l'une des revendications 14 à 21.
